(19) Europäisches Patentamt
European Patent Office
Office européen des brevets

(11) **EP 4 421 692 A1**

(12) **EUROPEAN PATENT APPLICATION**
published in accordance with Art. 153(4) EPC

(43) Date of publication:
**28.08.2024 Bulletin 2024/35**

(21) Application number: **21961433.6**

(22) Date of filing: **21.10.2021**

(51) International Patent Classification (IPC):
***G06N 20/00*** *(2019.01)*

(52) Cooperative Patent Classification (CPC):
**G06N 3/045; G06N 3/04; G06N 3/08; G06N 3/084;
G06N 20/00**

(86) International application number:
**PCT/JP2021/039020**

(87) International publication number:
**WO 2023/067782 (27.04.2023 Gazette 2023/17)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **FUJITSU LIMITED**
**Kawasaki-shi, Kanagawa 211-8588 (JP)**

(72) Inventor: **KINGETSU, Hiroaki**
**Kawasaki-shi, Kanagawa 211-8588 (JP)**

(74) Representative: **Hoffmann Eitle**
**Patent- und Rechtsanwälte PartmbB**
**Arabellastraße 30**
**81925 München (DE)**

(54) **MACHINE LEARNING PROGRAM, MACHINE LEARNING METHOD, AND INFORMATION PROCESSING DEVICE**

(57) The information processing apparatus generates a second model by updating, while fixing parameters of first one or more layers corresponding to a first position in a first model, parameters of second one or more layers corresponding to a second position in the first model, based on a loss function including entropy of a first output outputted from the first model in response to an input of first data to the first model, the first data being data that does not include correct labels; and generates a third model by updating, while fixing parameters of third one or more layers corresponding to the second position in the second model, parameters of fourth one or more layers corresponding to the first position, based on a loss function including entropy of a second output outputted from the second model in response to the input of the first data to the second model.

FIG. 9

EP 4 421 692 A1

**Description**

FIELD

The present disclosure relates to a machine learning program and the like.

BACKGROUND

A machine learning model is used for identifying and classifying information. In the operation of the machine learning model, "concept drift" may occur in which the distribution, the property, and the like of the training data with the correct label used for the machine learning gradually differ with the passage of time. The machine learning model performs discrimination and classification as in the training data, and therefore, when the trend of the input data (data distribution) changes during operation due to concept drift, the accuracy deteriorates. In order to adapt data affected by such concept drift, the machine learning model is retrained using new training data.

SUMMARY

TECHNICAL PROBLEM

However, in the above-described technique, it is difficult to maintain the accuracy of the machine learning model. For example, although the accuracy deterioration of the machine learning model may be suppressed by sequentially executing retraining each time the concept drift occurs, it takes a lot of man-hours to prepare training data with correct labels corresponding to the concept drift each time. Therefore, even when the accuracy is degraded, it forces to continuously use the machine learning model with degraded accuracy until the training data is prepared.

According to an aspect of the present invention, there is provided a machine learning apparatus that performs machine learning on a machine learning model.

SOLUTION TO PROBLEM

In a first scheme, the machine learning program causes the computer to execute processing of generating a second machine learning model by updating parameters of a second one or more layers corresponding to a second position of a first machine learning model while fixing parameters of a first one or more layers corresponding to the first position of the first machine learning model based on a loss function including entropy of a first output of the first machine learning model in response to an input of first data that does not include a correct label to the first machine learning model, and generating a third machine learning model by updating parameters of a fourth one or more layers corresponding to the first position while fixing parameters of a third one or more layers corresponding to the second position of the first machine learning model based on a loss function including entropy of a second output of the second machine learning model in response to an input of first data that does not include a correct label to the first output model.

ADVANTAGEOUS EFFECTS OF INVENTION

According to the embodiment, it is possible to suppress accuracy deterioration of the machine learning model.

BRIEF DESCRIPTION OF DRAWINGS

FIG. 1 is a diagram illustrating a machine learning model according to a first embodiment;
FIG. 2 is a diagram for explaining monitoring of the result of outputting a machine learning model;
FIG. 3 is a diagram for explaining a concept drift;
FIG. 4 is a diagram for explaining the operation of the machine learning model according to the first embodiment;
FIG. 5 is a functional block diagram illustrating a functional configuration of the information processing apparatus according to the first embodiment;
FIG. 6 is a diagram illustrating an example of training data stored in a training data DB;
FIG. 7 is a diagram illustrating an example of information stored in an output result DB;
FIG. 8 is a diagram for explaining preprocessing;
FIG. 9 is a diagram for explaining a training method during operation;
FIG. 10 is a diagram for explaining sequential training during operation;

FIG. 11 is a diagram for explaining batch training during operation;

FIG. 12 is a flowchart illustrating a flow of sequential training processing according to the first embodiment;

FIG. 13 is a flowchart illustrating a flow of a batch training process according to the first embodiment;

FIG. 14 is a diagram for explaining comparison of accuracy deterioration; and

FIG. 15 is a diagram for explaining an example of a hardware configuration.

DESCRIPTION OF EMBODIMENTS

Hereinafter, embodiments of a machine learning program, a machine learning method, and an information processing apparatus according to the present invention will be described in detail with reference to the drawings. The present invention is not limited to the embodiments. The embodiments may be combined as appropriate within a consistent range.

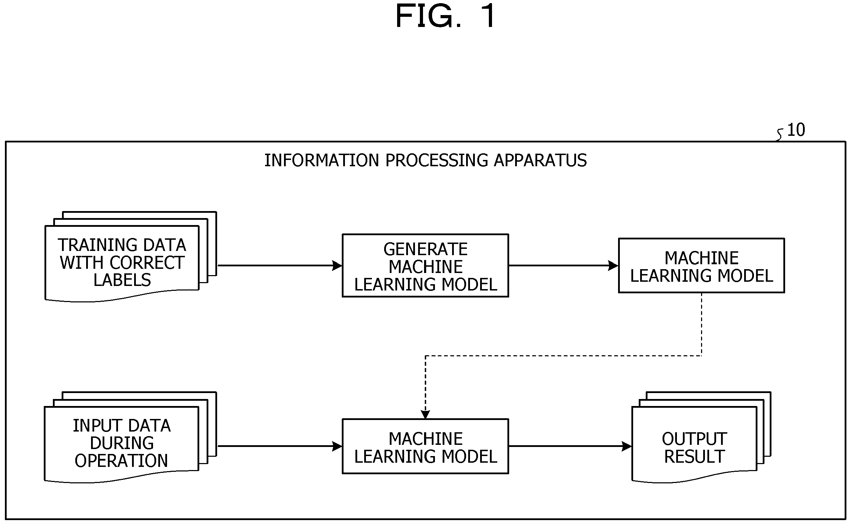

FIG. 1 is a diagram illustrating a machine learning model according to a first embodiment. As illustrated in FIG. 1, in the learning phase, the information processing apparatus 10 generates a machine learning model by machine learning using the training data with correct labels. In the operation phase, the information processing apparatus 10 inputs input data acquired during operation to the generated machine learning model, and executes the multi class classification, the two class classification, or the like. For example, the information processing apparatus 10 specifies a person or an object in the image using the machine learning model.

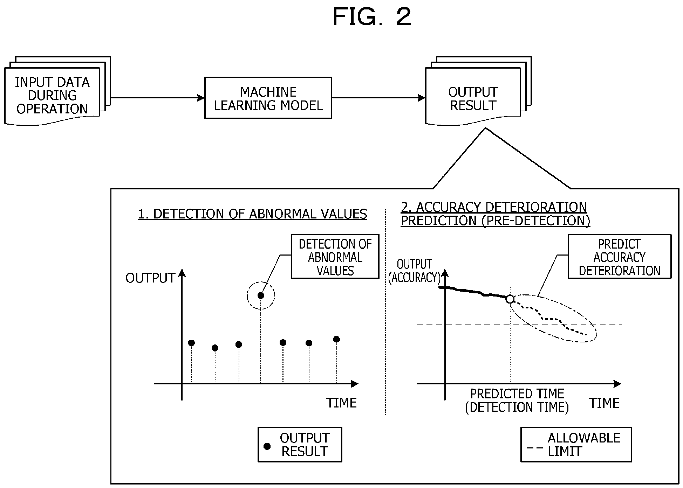

After the machine learning model is introduced, the accuracy of the machine learning model may deteriorate over time, so the output results are often monitored. FIG. 2 is a diagram illustrating monitoring of the machine learning model. As illustrated in FIG. 2, the administrator or the like monitors the output results outputted from the machine learning model in response to the input of the input data during the operation. At this time, the administrator or the like detects abnormal values different from normal values by monitoring. For example, when abnormal values occur a predetermined number of times, the administrator or the like determines that the machine learning model needs to be retrained when abnormal values occur a predetermined number of times. In addition, the administrator or the like predicts accuracy deterioration by monitoring. For example, when determining that the accuracy is lower than the allowable accuracy, the administrator or the like determines that the machine learning model needs to be retrained.

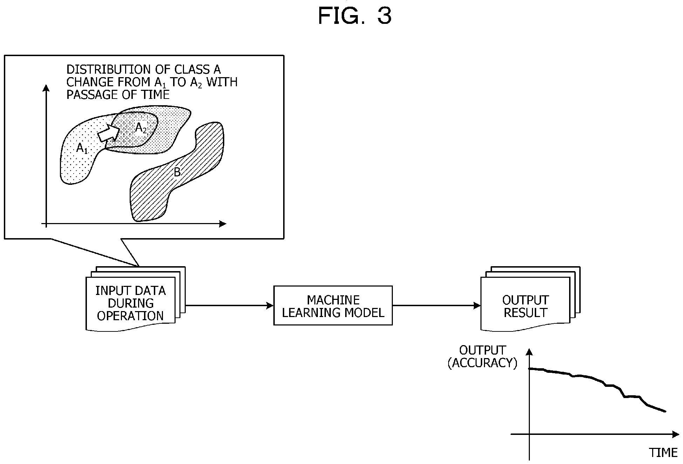

One of the factors of the accuracy deterioration of the machine learning model with the passage of time is the concept drift in which the distribution of the model changes. FIG. 3 is a diagram for explaining the concept drift. As illustrated in FIG. 3, the distribution of the class A changes from $A_1$ to $A_2$ with the passage of time. In this case, since the machine learning model has been trained based on the class $A_1$, the machine learning model may not accurately identify as the class A even when the class $A_2$ is input. Examples of data changes due to the concept drift include mail spam that changes so as not to be filtered by a spam filter, electricity demand and stock prices, and image data that depends on an imaging environment that changes from summer to winter or from morning to night.

In order to cause the machine learning model to enable adaptation to the concept drift, the machine learning model is retrained using new training data. However, it takes a lot of man-hours to prepare the new training data with correct labels adapted to the concept drift each time.

As a technique for following the concept drift, semi-supervised learning is also known. The semi-supervised learning is a machine learning technique that uses a large amount of unlabeled data on the assumption that the data distribution is the same. However, when the distribution of data changes as in the case of concept drift, the application of semi-supervised learning instead degrades the accuracy. This is because the number of pieces of operation data without the correct labels is much smaller than the number of pieces of learning data with the correct labels, so overlearning occurs and causes accuracy deterioration when the semi-supervised learning is performed using a small number of pieces of operation data with a changed distribution.

Therefore, in order to adapt the concept drift during the operation of the machine learning model without correct labels, the information processing apparatus 10 according to the first embodiment applies, in order for each specific layer, a loss function for forming a high-density projection to data distribution in the projection space, thereby causing the machine learning model to adapt the concept drift with high accuracy.

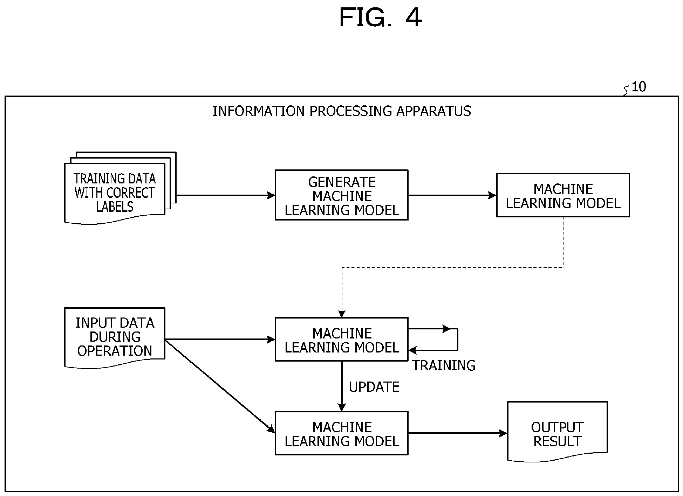

FIG. 4 is a diagram illustrating the operation of the machine learning model according to the first embodiment. As illustrated in FIG. 4, in the learning phase, the information processing apparatus 10 generates a machine learning model by machine learning using training data with correct labels. In the operation phase, the information processing apparatus 10 inputs the input data at the time of operation to the machine learning model to train the machine learning model, and inputs the input data to the machine learning model after the machine learning to execute the multi class classification, the two class classification, or the like.

For example, the information processing apparatus 10 generates a second machine learning model obtained by updating the first machine learning model. In the updating of the first machine learning model, the information processing apparatus 10 updates, while fixing the parameters of the first one or more layers corresponding to a first position in the first machine learning model, the parameters of the second one or more layers corresponding to a second position in the first machine learning model, based on a loss function including the entropy of a first output from the first machine learning model in response to the input of the first data to the first machine learning model, the first data being operational data that does not include correct answer labels.

The information processing apparatus 10 also generates a third machine learning model obtained by updating the second machine learning model. In the updating of the second machine learning model, the information processing apparatus 10 updates, while fixing the parameters of the third one or more layers corresponding to the second position in the second machine learning model, the parameters of the fourth one or more layers corresponding to the first position in the second machine learning model, based on the loss function including the entropy of a second output outputted from the second machine learning model in response to the input of the first data to the second machine learning model.

That is, when unsupervised machine learning is performed using a smaller number of pieces of operation data than pieces of training data, the information processing apparatus 10 suppresses accuracy degradation due to overlearning by updating, in a stepwise manner, a plurality of layers having different numbers of parameters to be updated in the machine learning model 14, rather than updating the plurality of layers at once.

The information processing apparatus 10 inputs the first data again to the generated third machine learning model and executes prediction for the first data based on the result outputted from the third machine learning model.

As described above, it allows the information processing apparatus 10 to execute operation and training in parallel by sequentially applying the loss function (Conditional Entropy Minimization), which enables learning in which the internal space tends to be dense, to each specific layer during operation of the machine learning model, and thereby suppressing accuracy deterioration of the machine learning model.

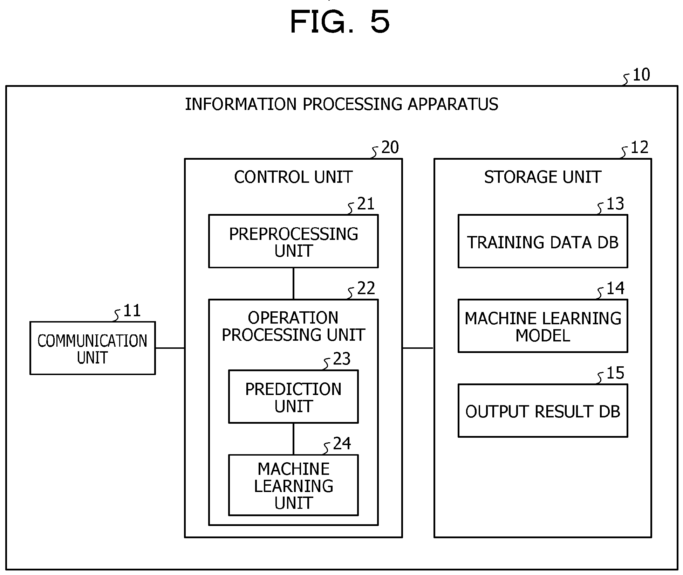

FIG. 5 is a functional block diagram of the information processing apparatus 10 according to the first embodiment. As illustrated in FIG. 5, the information processing apparatus 10 includes a communication unit 11, a storage unit 12, and a control unit 20.

The communication unit 11 controls communication with other devices. For example, the communication unit 11 receives operation data to be predicted by the machine learning model from external devices such as servers, cameras, and administrator terminals.

The storage unit 12 stores various data, programs executed by the control unit 20, and the like. For example, the storage unit 12 stores a training-data DB 13, a machine learning model 14, and an output-result DB 15.

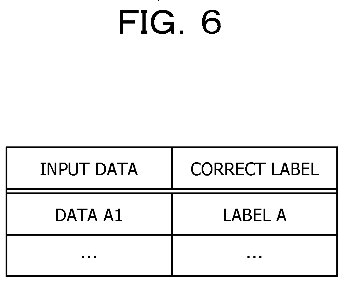

The training data DB 13 stores training data used for machine learning of the machine learning model 14. FIG. 6 is a diagram illustrating an example of the training data stored in the training data DB 13. As illustrated in FIG. 6, each training data stored in the training data DB 13 has "input data, correct label".

The "input data" is an explanatory variable of machine learning, and is, for example, an image data. The "correct label" is an objective variable of machine learning, and is, for example, a person in the image. In the example of FIG. 6, the training data in which the data A1 and the label A are associated with each other are illustrated. For example, when the machine learning model 14 such as image classification is generated, the training data DB 13 stores, as the training data, an image data to which a correct label "dog" is assigned, an image data to which a correct label "cat" is assigned, or the like.

The machine learning model 14 is a model generated by machine learning. For example, the machine learning model 14 is a model using a deep neural network (DNN) or the like, and a neural network or another machine learning algorithm may be adopted. In the present embodiment, an example in which the machine learning model 14 is generated by a control unit to be described later will be described, but the machine learning model 14 may be generated by another device.

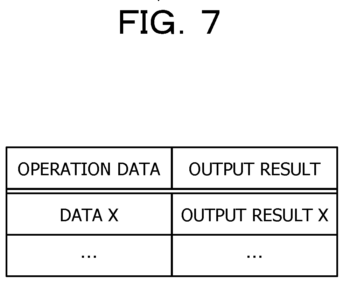

The output result DB 15 stores the output result obtained by the operation of the machine learning model 14. For example, the output-result DB 15 stores a prediction result predicted by the machine learning model 14. FIG. 7 is a diagram illustrating an example of information stored in the output-result DB 15. As illustrated in FIG. 7, the output-result DB 15 stores "operation-data and output-result" in association with each other. The "operation data" is data that is to be predicted and that is input to the machine learning model 14, and the "outputted result" is a prediction result predicted by the machine learning model 14. In the example of FIG. 7, it is illustrated that the data X is input to the machine learning model 14 and the output result X is acquired.

The control unit 20 is a processing unit configured to control the entire information processing apparatus 10. For example, the control unit 20 includes a preprocessing unit 21 and an operation processing unit 22.

The preprocessing unit 21 generates the machine learning model 14 as preprocessing before the operation of the machine learning model 14. To be specific, the preprocessing unit 21 generates the machine learning model 14 by updating various parameters of the machine learning model 14 by machine learning using each training data stored in the training data DB 13.

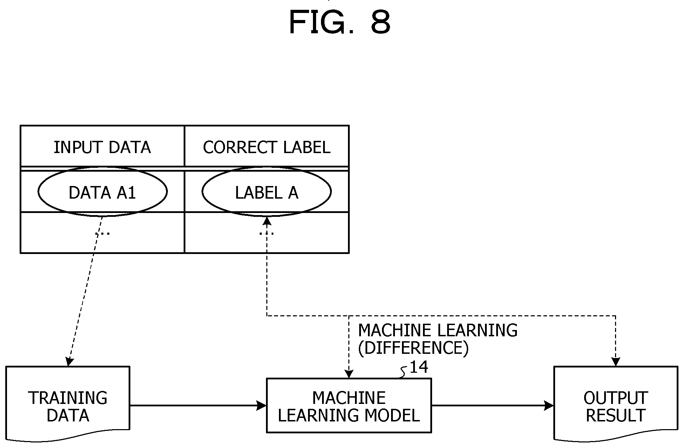

FIG. 8 is a diagram illustrating the preprocessing. As illustrated in FIG. 8, the preprocessing unit 21 inputs the training data "data A1, label A" stored in the training data DB 13 to the machine learning model 14, and performs machine learning on the machine learning model 14 so that the difference between the output result from the machine learning model 14 and the correct label "label A" becomes small.

The operation processing unit 22 includes a prediction unit 23 and a machine learning unit 24, and executes prediction by the machine learning model 14 and retraining of the machine learning model 14.

The prediction unit 23 performs prediction using the generated machine learning model 14. For example, when the operation data X to be predicted is received, the prediction unit 23 inputs the operation data X to the machine learning model 14 and acquires the output result X. The prediction unit 23 stores the "operation data X" and the "output result X" in the output result DB 15 in association with each other.

The machine learning unit 24 trains the machine learning model 14 by machine learning using the operation data, during the operation of the machine learning model 14. That is, the machine learning unit 24 updates the machine learning model 14 by retraining the machine learning model 14 after the operation is started.

To be specific, the machine learning unit 24 updates, while fixing the parameters of the first one or more layers corresponding to the first position of the machine learning model 14, the parameters of the second one or more layers corresponding to the second position, based on the loss function including the entropy of the first output from the machine learning model 14 in response to the input of the operation data to the machine learning model 14. In this way, the machine learning unit 24 generates the machine learning model 14 after the update, which is an example of the second machine learning model, in which the parameter of the layer at the second position in the machine learning model 14 is updated.

Subsequently, the machine learning unit 24 updates, while fixing the parameters of the third one or more layers corresponding to the second position in the updated machine learning model 14, the parameters of the fourth one or more fourth layers corresponding to the first position in the updated machine learning model 14, based on the loss function including the entropy of the second output outputted from the updated machine learning model 14 in response to the input of the same operation data to the updated machine learning model 14. In this way, the machine learning unit 24 generates the updated machine learning model 14 which is an example of the third machine learning model in which the parameter of the layer at the first position in the updated machine learning model 14 is further updated.

For example, an example in which the machine learning model 14 includes a Batch Normalization (BN) layer and a Fully Connected (FC) layer will be described. In this case, the machine learning unit 24 updates the machine learning model 14 by updating, while fixing the parameters of one or more FC layers corresponding to the first position in the machine learning model 14, the parameters of one or more BN layers corresponding to the second position in the machine learning model 14 by unsupervised learning using the operation data. Subsequently, the machine learning unit 24 further updates the machine learning model 14 by updating, while fixing the updated parameters of one or more BN layers corresponding to the second position in the updated machine learning model 14, the parameters of one or more FC layers corresponding to the first position in the machine learning model 14 by unsupervised learning using the operation data.

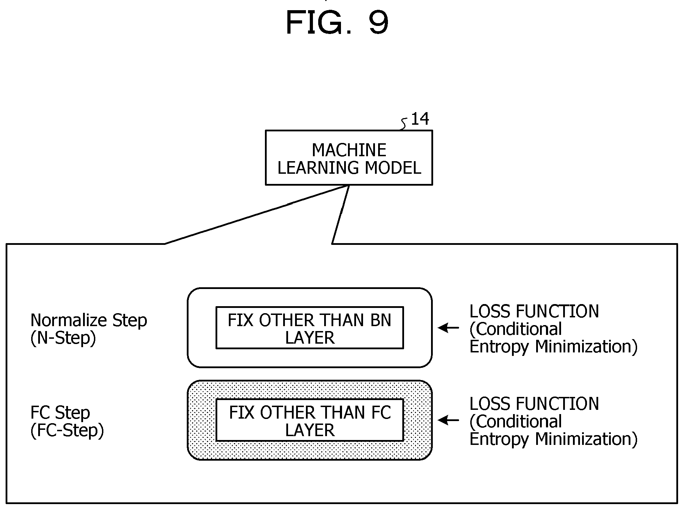

Here, the machine learning during operation will be described in detail. FIG. 9 is a diagram for explaining a training method during operation. As illustrated in FIG. 9, the machine learning model 14 includes a BN layer and an FC layer. The BN layer is a layer for normalizing the input for each batch so that the average is 0 and the standard deviation is 1.) The BN layer is a part of the Future Extractor, and usually exists as several layers among convolutional layers. It should be noted that the number of layers varies depending on the architecture of the model. The FC layer is a fully connected layer that actually performs classification using features after feature extraction is performed by the Future Extractor, wherein the fully connected layer, normally one to three layers, is arranged as the final layer, to perform outputs for the number of predicted classes.

Therefore, the machine learning unit 24 sequentially executes: an update process (N-Step) of updating the parameters of the BN layer while fixing the parameters of the layers other than the BN layer so as not to update the parameters of the layers other than the BN layer, and an update process (FC-Step) of updating the parameters of the FC layer while fixing the parameters of the layers other than the FC layer so as not to update the parameters of the layers other than the FC layer. The N-Step is an update process of adjusting only the parameters when the affine transformation is performed after the normalization. The FC-Step is an update process of directly adjusting the weight of the FC layer.

Further, as the loss function used in the N-Step and the FC-Step, a loss function that updates the weight so as to minimize the conditional entropy represented by Equation (1) may be adopted. C in Equation (1) is the number of classes, and y-hat is a predicted class of the machine learning model 14 rather than the correct label. In this case, the machine learning unit 24 performs machine learning so that pieces of data classified into the same class are collected in the deep learning space.

[Formula 1]

$$\text{Entropy} = -\sum_{\{c\}} \widehat{y_c} \log \widehat{y_c} \qquad \cdots (1)$$

Note that Pseudo Labeling may be adopted as the loss function. In this case, the cross entropy is used, and the correct label is usually used for the cross entropy. Therefore, in the present embodiment, the cross entropy is calculated using the prediction y-hat of the model instead of the correct label y. As another example, Virtual Adversarial Training may be adopted. In this case, a perturbation in the direction of error-prone classification (noise) is added, and machine learning is performed so as to minimize the Kullback-Leibler divergence (KL distances) before noise and after noise insertion.

As described above, it allows the information processing apparatus 10 to adapt to the concept drift by performing the prediction and the machine learning (retraining) in the operation phase of the machine learning model 14. The information processing apparatus 10 may execute machine learning in the operation phase sequentially for each piece of operation data or may execute a certain number of pieces of operation data collectively by batch processing. The details thereof will be described. In addition, the information processing apparatus 10 alternately executes the N-Step and the FC-Step for the designated number of iterations and gradually decreases the learning rate, regardless of which method is used to update the machine learning model 14.

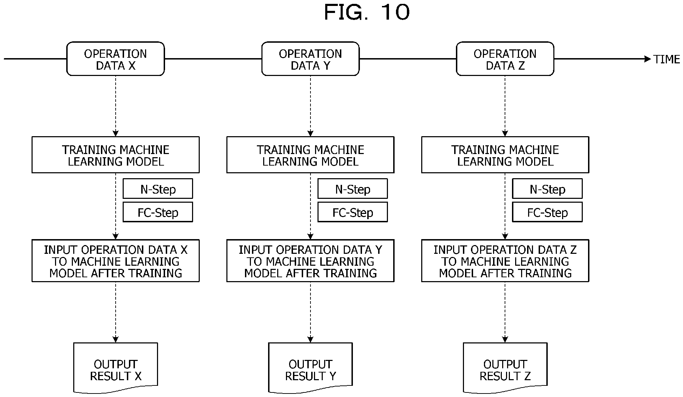

FIG. 10 is a diagram illustrating sequential training during operation. As illustrated in FIG. 10, the operation processing unit 22 may execute the machine learning of the machine learning model 14 each time operation data is input, and execute the prediction using the machine learning model 14 after the parameter update.

For example, when the operation data X is received, the operation processing unit 22 updates the parameters of the BN layer in the machine learning model 14 by the N-Step using the operation data X as the training data. Subsequently, the operation processing unit 22 updates the parameters of the FC layer in the machine learning model 14 by performing the FC-Step using the operation data X as the training data on the machine learning model 14 in which the BN layer has been updated. The operation processing unit 22 inputs the operation data X to the updated machine learning model 14, which has been updated in the order of the BN layer and the FC layer, to obtain the output result X.

Thereafter, when new operation data Y is received, the operation processing unit 22 updates the parameters of the BN layer in the machine learning model 14 by performing the N-Step using the operation data Y as the training data. Subsequently, the operation processing unit 22 updates the parameters of the FC layer in the machine learning model 14 by performing the FC-Step using the operation data Y as the training data on the machine learning model 14 in which the BN layer has been updated. The operation processing unit 22 inputs the operation data Y to the machine learning model 14, which has been updated in the order of the BN layer and the FC layer, to obtain the output result Y.

Thereafter, when new operation data Z is received, the operation processing unit 22 updates the parameters of the BN layer in the machine learning model 14 by performing the N-Step using the operation data Z as the training data. Subsequently, the operation processing unit 22 updates the parameters of the FC layer in the machine learning model 14 by performing the FC-Step using the operation data Z as the training data on the machine learning model 14 in which the BN layer has been updated. The operation processing unit 22 inputs the operation data Z to the machine learning model 14, which has been updated in the order of the BN layer and the FC layer, to obtain the output result Z.

In this way, it allows the information processing apparatus 10 to adapt to the conflict drift in real time by sequentially executing the machine learning, and thereby maintaining the accuracy of the machine learning model 14 at high accuracy.

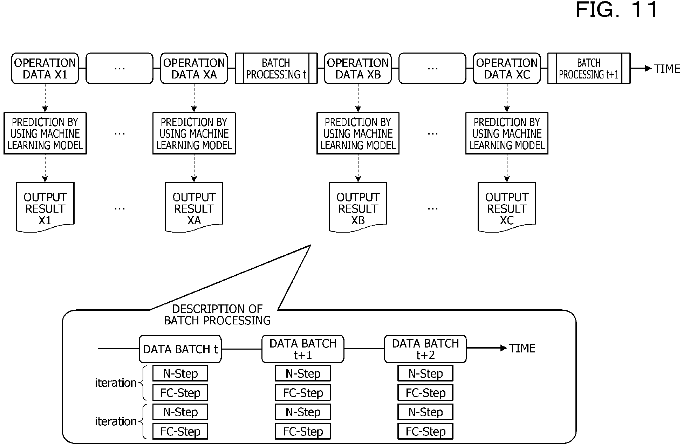

FIG. 11 is a diagram illustrating batch training during operation. As illustrated in FIG. 11, the operation processing unit 22 executes prediction each time operation data is input, and updates the parameters of the machine learning model 14 by performing machine learning on the machine learning model 14 by batch processing when processing for a certain number of operation data is completed or when a certain time has elapsed from the start of operation.

For example, when the operation data X1 is received, the operation processing unit 22 inputs the operation data X1 to the machine learning model 14 and acquires the output result X1. Such prediction process is executed until the operation data XA. Thereafter, when the timing of the batch processing comes, the operation processing unit 22 updates the parameters of the BN layer in the machine learning model 14 by performing the N-Step using, as the training data, the operation data X1 to XA received so far. Subsequently, the operation processing unit 22 updates the parameters of the FC layer in the machine learning model 14 by performing the FC-Step using the operation data X1 to XA as the training data on the machine learning model 14 in which the BN layer has been updated. The operation processing unit 22 repeats performing of the N-Step and the FC-Step for the designated number of iterations, and then restarts prediction for subsequent operation data by using the machine learning model 14, which has been updated in the order of the BN layer and the FC layer.

Thereafter, when the operation data XB is received, the operation processing unit 22 inputs the operation data XB to the machine learning model 14, acquires the output result XB, and executes prediction. Such prediction processing is executed until the operation data XC. Thereafter, when the timing of the batch processing comes, the operation processing unit 22 updates the parameters of the BN layer in the machine learning model 14 by performing the N-Step using, as the training data, the operation information XB to XC received after the restart. Subsequently, the operation processing unit 22 updates the parameters of the FC layer in the machine learning model 14 by performing the FC-Step using the operation data XB to XC as the training data on the machine learning model 14 in which the BN layer has been updated. The operation processing unit 22 repeats N-Step and FC-Step for the designated number of iterations, and then restarts prediction for subsequent operation data by using the machine learning model 14 updated in the order of the BN layer and the FC layer.

In this way, it allows the information processing apparatus 10 to adapt to the conflict drift while maintaining the high speed of the prediction process by executing the machine learning in the batch process, and thereby achieving both the accuracy and the processing speed.

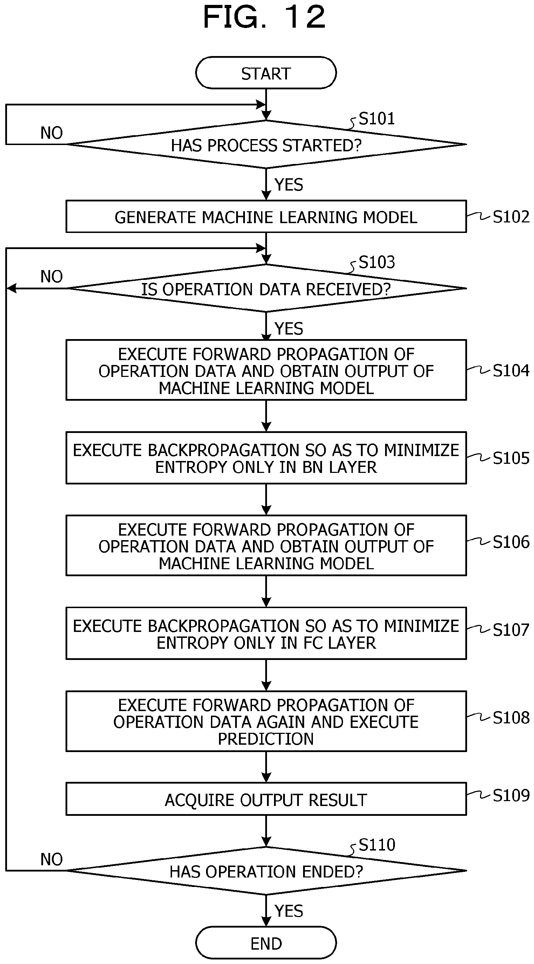

FIG. 12 is a flowchart illustrating a flow of sequential training processing according to the first embodiment. Although the number of iterations is one in the example described below, the number of iterations can be arbitrarily set and changed.

As illustrated in FIG. 12, when the preprocessing unit 21 is instructed to start the processing (S101: Yes), the preprocessing unit 21 generates the machine learning model 14 using the training data (S102).

Thereafter, when the operation data is received (S103: Yes), the operation processing unit 22 inputs the operation data to the machine learning model 14 to execute forward propagation, and obtains an output of the machine learning model 14 (S104). Subsequently, the operation processing unit 22 updates the parameters of the BN layer by executing backpropagation so as to minimize entropy only in the BN layer by using the result of the forward propagation (S105).

Further, the operation processing unit 22 inputs the operation data to the machine learning model 14, executes forward propagation, and obtains an output of the machine learning model 14 (S106). Subsequently, the operation processing unit 22 updates the parameter of the FC layer by executing backpropagation so as to minimize entropy only in the FC layer by using the result of the forward propagation (S107).

Thereafter, the operation processing unit 22 executes prediction (S108) by inputting the operation data again to the machine learning model 14 in which the BN layer and the FC layer are sequentially updated, and performing forward propagation, and acquires an output result (predicted result) (S109).

Then, when the operation is continued (S110: No), the S103 and the subsequent steps are repeated. When the operation is ended (S110: Yes), the operation processing unit 22 ends the process. Note that S104 to S107 are executed for the designated number of iterations.

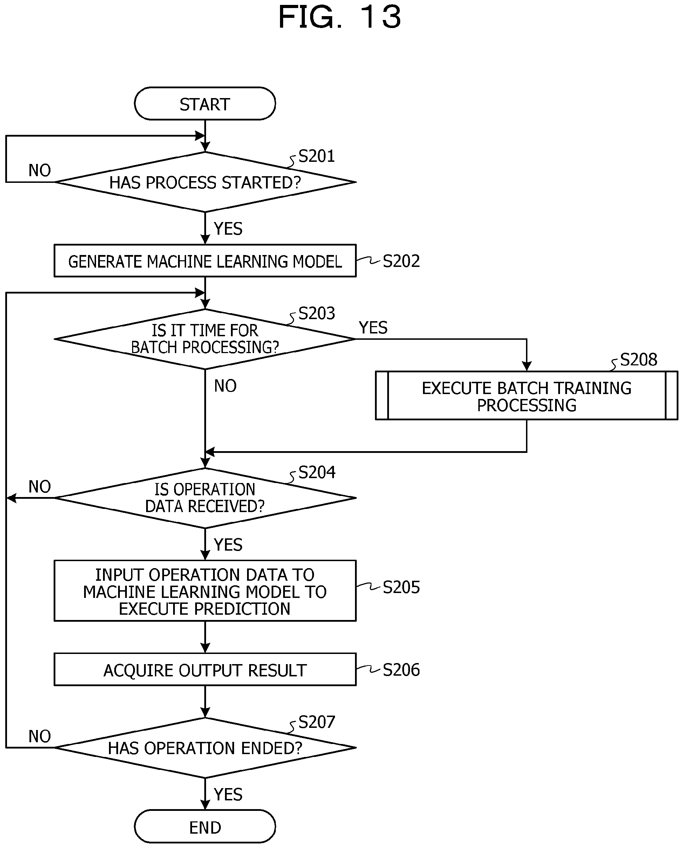

FIG. 13 is a flowchart illustrating a flow of the batch training process according to the first embodiment. As illustrated in FIG. 13, when the preprocessing unit 21 is instructed to start the processing (S201: Yes), the preprocessing unit 21 generates the machine learning model 14 using the training data (S202).

When the current time is not the batch processing timing (S203: No) and the operation data is received (S204: Yes), the operation processing unit 22 executes prediction (S205) by inputting the operation data to the machine learning model 14 and acquires the output result of prediction (S206).

Thereafter, when the operation is continued (S207: No), the S203 and the subsequent steps are repeated. When the operation is ended (S207: Yes), the operation processing unit 22 ends the process.

On the other hand, in S204, when the operation processing unit 22 does not receive the operation data (S204: No), S203 and the subsequent steps are repeated.

In addition, in S203, in a case where it is the batch processing timing (S203: Yes), the operation processing unit 22 updates the machine learning model 14 (S208) by executing the batch processing, and executes S204 and the subsequent steps. The batch processing corresponds to S104 to S107 in FIG. 12, and is executed for the designated number of iterations.

As described above, it allows the information processing apparatus 10 to adapt to the concept drift by adjusting the weights of only a part of the layers in the machine learning model 14 without changing the architecture of the original machine learning model 14 generated before operation. Further, the information processing apparatus 10 does not need to prepare another machine learning model for detecting the concept drift or another machine learning model for adapting the concept drift during the operation. Thus, it allows the information processing apparatus 10 to achieve both suppression of accuracy deterioration due to application of the machine learning model 14 to the concept drift during the operation and quick prediction.

Here, a verification result of accuracy deterioration in a case where a concept drift occurs in each machine learning model trained by open data with correct answer labels will be described. As the machine learning models, there are prepared an original model not subjected to retraining after the training data, a machine learning model using the Tree Tensor Network (TTN), a machine learning model using the Pseudo-Label (PL) method, a machine learning model updated by the method according to the first embodiment performing in the order of the N-Step and the FC-Step, and a machine learning model updated by the method according to the first embodiment performing in the order of the FC-Step and the N-Step. In addition, as the concept drift, image data is generated by adding some noise such as Gaussian noise, shot noise, impulse noise, defocus blur, and glass blur to each image data of the open data.

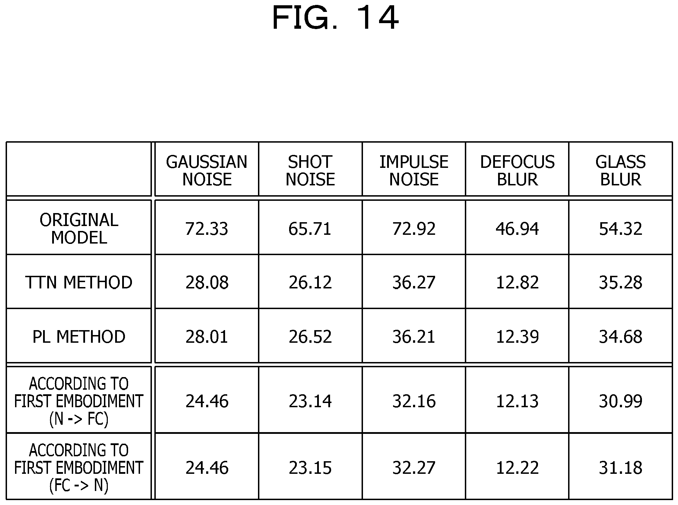

The verification was performed by evaluating the error rate of the output result when the image data used for training and the image data to which the noise is added are input to each of the machine learning models. FIG. 14 is a diagram for explaining comparison of accuracy deterioration. As illustrated in FIG. 14, for the image data to which each noise is added, it is verified that the method according to the first embodiment has a lower error rate than any of the original model, the TNT method, and the PL method. In addition, it is found that, in the method according to the first embodiment, the error rate is slightly smaller when the N-Step of updating the BN layer is executed first. As described above, it allows the method according to the first embodiment to suppress the accuracy deterioration of the machine learning model as compared with any other method serving as a reference.

The data examples, the numerical value examples, the layer number examples, the information of each DB, and the like used in the above-described embodiment are merely examples, and can be arbitrarily changed. The information processing apparatus 10 may execute either the N-Step or the FC-Step first.

Further, the target of machine learning (retraining) during operation is not limited to the BN layer and the FC layer. For example, the information processing apparatus 10 may classify the layers included in the machine learning model 14 into a first layer group and a second layer group. The first layer group is a layer group that includes one or more layers in the machine learning model 14, wherein each layer in the first layer group is a layer in which the number of parameters in the layer is less than a predetermined value. The second layer group is a layer group that includes one or more layers in the machine learning model 14, wherein each layer in the second layer group is a layer in which the number of parameters in the layer is equal to or more than the predetermined value. The information processing apparatus 10 may execute, by the machine learning using the operation data, the parameter update of each layer of the first attribute while fixing the parameter of each layer of the second attribute group, and then the parameter update of each layer of the second attribute while fixing the parameter of each layer of the first attribute group.

The above embodiment is described as an example during the operation of the machine learning model 14 generated using the training data, but the application of the method such as the N-Step described in the first embodiment is not limited to timing during the operation. For example, when the machine learning model 14 is applied to an environment different from the training data, the machine learning model 14 may be applied to the application environment in advance before the start of the operation by executing the N-Step and the FC-Step prior to the application (operation). Examples of the different environment include the imaging environment of image data and the performance including the resolution of a camera that captures image data.

The processing procedures, the control procedures, the specific names, and the information including various data and parameters described in the above description and the drawings may be arbitrarily changed unless otherwise specified.

In addition, a specific form of distribution or integration of the constituent elements of each device is not limited to the illustrated form. For example, the preprocessing unit 21 and the operation processing unit 22 may be integrated. That is, all or some of the constituent elements may be functionally or physically distributed or integrated in arbitrary units according to various loads or use conditions. Furthermore, all or any part of the processing functions of the devices may be realized by a CPU and a program analyzed and executed by the CPU, or may be realized as hardware by wired logic.

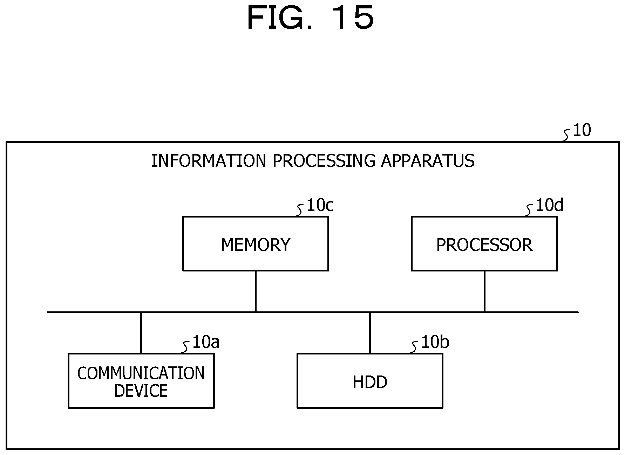

FIG. 15 is a diagram illustrating an example of a hardware configuration. As illustrated in FIG. 15, the information processing apparatus 10 includes a communication device 10a, a hard disk drive (HDD) 10b, a memory 10c, and a processor 10d. The units illustrated in FIG. 15 are connected to each other via a bus or the like.

The communication device 10a is a network interface card or the like, and performs communication with other devices. The HDD 10b stores a program and a DB for operating the functions illustrated in FIG. 5.

The processor 10d operates a process for executing each function described in FIG. 5 and the like, by reading, from the HDD 10b or the like, a program for executing the same processing as each processing unit illustrated in FIG. 5 from the HDD 10b or the like and deploying the program in the memory 10c. For example, this process executes the same functions as those of the processing units included in the information processing apparatus 10. To be specific, the processor 10d reads, from HDD10b or the like, a program having the same functions as those of the preprocessing unit 21, the operation processing unit 22, and the like. The processor 10d executes one or more processes configured to execute the same processing as the preprocessing unit 21, the operation processing unit 22, and the like.

In this way, the information processing apparatus 10 operates, by reading and executing the program, as an information processing apparatus configured to execute a machine learning method. The information processing apparatus 10 may also realize the same functions as those of the above-described embodiments by reading the program from the recording medium by the medium reading device and executing the read program. The program according to the other embodiments is not limited to being executed by the information processing apparatus 10. For example, the above-described embodiments may be similarly applied to a case where another computer or a server executes the program or a case where these computers or servers execute the program in cooperation with each other.

The program may be distributed via a network such as the Internet. The program may be recorded in a computer-readable recording medium such as a hard disk, a flexible disk (FD), a CD-ROM, a magneto-optical (MO) disk, or a digital versatile disc (DVD), and may be executed by being read from the recording medium by the computer.

CITATION LIST

[Non-Patent Document 1] Sergey Ioffe, Christian Szegedy, "Batch Normalization: Accelerating Deep Network Training by Reducing Internal Covariate Shift", arXiv: 1502. 03167v3 [cs. LG] 2 Mar 2015

REFERENCE SIGNS LIST

10 information processing apparatus
11 communication unit
12 storage unit
13 training data DB
14 machine learning model
15 output result DB
20 control unit
21 preprocessing unit
22 operation processing unit
23 prediction unit
24 machine learning unit

**Claims**

1.  A machine learning program for causing a computer to execute processing comprising:

    generating a second machine learning model by updating, while fixing parameters of first one or more layers corresponding to a first position in a first machine learning model, parameters of second one or more layers corresponding to a second position in the first machine learning model, based on a loss function including entropy of a first output that is outputted from the first machine learning model in response to an input of first data to the first machine learning model, the first data being data that does not include correct labels; and
    generating a third machine learning model by updating, while fixing parameters of third one or more layers corresponding to the second position in the second machine learning model, parameters of fourth one or more layers corresponding to the first position, based on a loss function including entropy of a second output that is outputted from the second machine learning model in response to the input of the first data to the second machine learning model.

2.  The machine learning program according to claim 1, wherein the processing further comprising: inputting the first data to the generated third machine learning model; and performing prediction on the first data based on a result outputted from the third machine learning model.

3.  The machine learning program according to claim 1, the processing further comprising:

    generating a first machine learning model by updating parameters of each layer in the first machine learning model so that a difference between an output result of the first machine learning model and the correct labels is reduced, the output result being a result outputted from the first machine learning model in response to an input of training data including the correct labels to the first machine learning model, wherein
    the generating of the second machine learning model includes generating the second machine learning model by updating, based on the loss function according to the input of the first data to be predicted to the first machine learning model, the first machine learning model generated using the training data,
    the generating of the third machine learning model includes generating the third machine learning model by updating the first machine learning model based on the loss function according to the input of the first data to be predicted to the second machine learning model.

4.  The machine learning program according to claim 1, wherein

    the first machine learning model is a machine learning model that includes at least a batch normalization layer and a fully connected layer,

the generating of the second machine learning model includes generating the second machine learning model by updating parameters of the batch normalization layer corresponding to the second position in the first machine learning model while fixing the parameter of the fully connected layer corresponding to the first position in the first machine learning model, the updating of the parameters of the batch normalization layer being performed by performing machine learning that minimizes the entropy of the output of the batch normalization layer based on the loss function, the loss function being a loss function including the entropy of the output of the batch normalization layer in response to the input of the first data to the first machine learning model, and

the generating of the third machine learning model includes generating the third machine learning model by updating parameters of the fully connected layer corresponding to the first position in the second machine learning model while fixing the parameter of the batch normalization layer corresponding to the second position in the second machine learning model, the updating of the parameters of the fully connected layer being performed by performing machine learning that minimizes the entropy of the output of the fully connected layer based on the loss function including the entropy of the output of the fully connected layer in response to the input of the first data to the second machine learning model.

5. The machine learning program according to claim 1, wherein

each layer of the first one or more layers corresponding to the first position is a layer in which a number of parameters updated by machine learning is equal to or greater than a predetermined value, and
each of the first one or more layers corresponding to the second position is a layer in which a number of parameters updated is less than the thresholds.

6. The non-transitory computer-readable storage medium according to claim 1, wherein the loss function is a loss function for updating a weight of a layer to be updated so as to minimize, as conditional entropy, entropy of an output of the layer which is updated by machine learning.

7. A machine learning method implemented by a computer, the method comprising:

generating a second machine learning model by updating, while fixing parameters of first one or more layers corresponding to a first position in a first machine learning model, parameters of second one or more layers corresponding to a second position in the first machine learning model, based on a loss function including entropy of a first output that is outputted from the first machine learning model in response to an input of first data to the first machine learning model, the first data being data that does not include correct labels; and
generating a third machine learning model by updating, while fixing parameters of third one or more layers corresponding to the second position in the second machine learning model, parameters of fourth one or more layers corresponding to the first position, based on a loss function including entropy of a second output that is outputted from the second machine learning model in response to the input of the first data to the second machine learning model.

8. An information processing apparatus comprising a control unit configured to perform processing comprising:

generating a second machine learning model by updating, while fixing parameters of first one or more layers corresponding to a first position in a first machine learning model, parameters of second one or more layers corresponding to a second position in the first machine learning model, based on a loss function including entropy of a first output that is outputted from the first machine learning model in response to an input of first data to the first machine learning model, the first data being data that does not include correct labels; and
generating a third machine learning model by updating, while fixing parameters of third one or more layers corresponding to the second position in the second machine learning model, parameters of fourth one or more layers corresponding to the first position, based on a loss function including entropy of a second output that is outputted from the second machine learning model in response to the input of the first data to the second machine learning model.

# FIG. 1

EP 4 421 692 A1

INFORMATION PROCESSING APPARATUS · 10

```
┌─────────────────┐       ┌─────────────┐       ┌─────────────┐
│ TRAINING DATA   │       │  GENERATE   │       │   MACHINE   │
│ WITH CORRECT    │ ────▶ │  MACHINE    │ ────▶ │  LEARNING   │
│ LABELS          │       │LEARNING MODEL│       │    MODEL    │
└─────────────────┘       └─────────────┘       └─────────────┘
                                                         ┆
                                                         ┆
┌─────────────────┐       ┌─────────────┐       ┌─────────────┐
│ INPUT DATA      │       │   MACHINE   │       │   OUTPUT    │
│ DURING          │ ────▶ │  LEARNING   │ ────▶ │   RESULT    │
│ OPERATION       │       │    MODEL    │       │             │
└─────────────────┘       └─────────────┘       └─────────────┘
```

# FIG. 2

INPUT DATA DURING OPERATION → MACHINE LEARNING MODEL → OUTPUT RESULT

**1. DETECTION OF ABNORMAL VALUES**

DETECTION OF ABNORMAL VALUES

OUTPUT

TIME

OUTPUT RESULT

**2. ACCURACY DETERIORATION PREDICTION (PRE-DETECTION)**

PREDICT ACCURACY DETERIORATION

OUTPUT (ACCURACY)

PREDICTED TIME (DETECTION TIME)

TIME

ALLOWABLE LIMIT

# FIG. 3

DISTRIBUTION OF CLASS A
CHANGE FROM $A_1$ TO $A_2$ WITH
PASSAGE OF TIME

$A_2$

$A_1$

B

INPUT DATA
DURING
OPERATION

MACHINE
LEARNING MODEL

OUTPUT
RESULT

OUTPUT
(ACCURACY)

TIME

# FIG. 4

INFORMATION PROCESSING APPARATUS ⌐10

```
TRAINING DATA        →    GENERATE        →    MACHINE
WITH CORRECT              MACHINE              LEARNING MODEL
LABELS                    LEARNING MODEL
```

```
INPUT DATA          →    MACHINE          TRAINING
DURING                   LEARNING MODEL
OPERATION
                         │ UPDATE
                         ↓
                         MACHINE          →    OUTPUT
                         LEARNING MODEL         RESULT
```

# FIG. 5

┌─────────────────────────────────────────────────────────────────────┐ 10
│                  INFORMATION PROCESSING APPARATUS                      │
│                                                                        │
│   ┌────────────────────────────────┐   ┌────────────────────────────┐ │
│   │         CONTROL UNIT    20      │   │     STORAGE UNIT     12     │ │
│   │                                 │   │                            │ │
│   │   ┌─────────────────────┐ 21    │   │   ┌────────────────────┐13 │ │
│   │   │    PREPROCESSING     │      │   │   │  TRAINING DATA DB   │   │ │
│   │   │        UNIT          │      │   │   │                     │   │ │
│   │   └─────────────────────┘       │   │   └────────────────────┘   │ │
│   │   ┌─────────────────────┐ 22    │   │   ┌────────────────────┐14 │ │
│   │   │      OPERATION       │      │   │   │ MACHINE LEARNING    │   │ │
│   │   │  PROCESSING UNIT     │      │   │   │     MODEL           │   │ │
│   │   │              23      │      │   │   └────────────────────┘   │ │
│   │   │  ┌───────────────┐   │      │   │   ┌────────────────────┐15 │ │
│   │   │  │  PREDICTION    │   │      │   │   │ OUTPUT RESULT DB    │   │ │
│   │   │  │    UNIT        │   │      │   │   │                     │   │ │
│   │   │  └───────────────┘   │      │   │   └────────────────────┘   │ │
│   │   │            24        │      │   │                            │ │
│   │   │  ┌───────────────┐   │      │   │                            │ │
│   │   │  │   MACHINE      │   │      │   │                            │ │
│   │   │  │  LEARNING      │   │      │   │                            │ │
│   │   │  │    UNIT        │   │      │   │                            │ │
│   │   │  └───────────────┘   │      │   │                            │ │
│   │   └─────────────────────┘       │   │                            │ │
│   └────────────────────────────────┘   └────────────────────────────┘ │
│   ┌──────────────┐ 11                                                   │
│   │COMMUNICATION │                                                      │
│   │    UNIT       │                                                     │
│   └──────────────┘                                                      │
└─────────────────────────────────────────────────────────────────────┘

# FIG. 6

| INPUT DATA | CORRECT LABEL |
|------------|---------------|
| DATA A1 | LABEL A |
| ... | ... |

# FIG. 7

| OPERATION DATA | OUTPUT RESULT |
|---|---|
| DATA X | OUTPUT RESULT X |
| … | … |

# FIG. 8

| INPUT DATA | CORRECT LABEL |
|------------|---------------|
| DATA A1 | LABEL A |
| .. | .. |

TRAINING DATA

MACHINE LEARNING (DIFFERENCE)

14

MACHINE LEARNING MODEL

OUTPUT RESULT

# FIG. 9

14

MACHINE
LEARNING MODEL

Normalize Step
(N-Step)

FIX OTHER THAN BN
LAYER

LOSS FUNCTION
(Conditional
Entropy Minimization)

FC Step
(FC-Step)

FIX OTHER THAN FC
LAYER

LOSS FUNCTION
(Conditional
Entropy Minimization)

FIG. 10

| OPERATION DATA X | OPERATION DATA Y | OPERATION DATA Z | TIME |

TRAINING MACHINE LEARNING MODEL
N-Step
FC-Step

TRAINING MACHINE LEARNING MODEL
N-Step
FC-Step

TRAINING MACHINE LEARNING MODEL
N-Step
FC-Step

INPUT OPERATION DATA X TO MACHINE LEARNING MODEL AFTER TRAINING

INPUT OPERATION DATA Y TO MACHINE LEARNING MODEL AFTER TRAINING

INPUT OPERATION DATA Z TO MACHINE LEARNING MODEL AFTER TRAINING

OUTPUT RESULT X

OUTPUT RESULT Y

OUTPUT RESULT Z

FIG. 11

| OPERATION DATA X1 | ... | OPERATION DATA XA | BATCH PROCESSING t | OPERATION DATA XB | ... | OPERATION DATA XC | BATCH PROCESSING t+1 | → TIME |

PREDICTION BY USING MACHINE LEARNING MODEL ... PREDICTION BY USING MACHINE LEARNING MODEL    PREDICTION BY USING MACHINE LEARNING MODEL ... PREDICTION BY USING MACHINE LEARNING MODEL

OUTPUT RESULT X1 ... OUTPUT RESULT XA    OUTPUT RESULT XB ... OUTPUT RESULT XC

DESCRIPTION OF BATCH PROCESSING

| DATA BATCH t | DATA BATCH t+1 | DATA BATCH t+2 | → TIME |

iteration {
| N-Step | N-Step | N-Step |
| FC-Step | FC-Step | FC-Step |
}

iteration {
| N-Step | N-Step | N-Step |
| FC-Step | FC-Step | FC-Step |
}

# FIG. 12

START

S101
HAS PROCESS STARTED?

NO

YES

GENERATE MACHINE LEARNING MODEL — S102

S103
IS OPERATION DATA RECEIVED?

NO

YES

EXECUTE FORWARD PROPAGATION OF OPERATION DATA AND OBTAIN OUTPUT OF MACHINE LEARNING MODEL — S104

EXECUTE BACKPROPAGATION SO AS TO MINIMIZE ENTROPY ONLY IN BN LAYER — S105

EXECUTE FORWARD PROPAGATION OF OPERATION DATA AND OBTAIN OUTPUT OF MACHINE LEARNING MODEL — S106

EXECUTE BACKPROPAGATION SO AS TO MINIMIZE ENTROPY ONLY IN FC LAYER — S107

EXECUTE FORWARD PROPAGATION OF OPERATION DATA AGAIN AND EXECUTE PREDICTION — S108

ACQUIRE OUTPUT RESULT — S109

S110
HAS OPERATION ENDED?

NO

YES

END

# FIG. 13

```
                    ┌─────────────┐
                    │    START    │
                    └─────────────┘
                           │
                           ▼
        ┌──────────────────────────────┐  S201
   NO ◄─┤      HAS PROCESS STARTED?     │
        └──────────────────────────────┘
                           │ YES
                           ▼
        ┌──────────────────────────────┐  S202
        │ GENERATE MACHINE LEARNING MODEL │
        └──────────────────────────────┘
                           │
                           ▼
        ┌──────────────────────────────┐  S203
        │         IS IT TIME FOR        │── YES ──┐
        │       BATCH PROCESSING?       │         │
        └──────────────────────────────┘         ▼
                           │ NO         ┌──────────────────────────┐  S208
                           │            │  EXECUTE BATCH TRAINING  │
                           │◄───────────│        PROCESSING        │
                           │            └──────────────────────────┘
                           ▼
        ┌──────────────────────────────┐  S204
   NO ◄─┤        IS OPERATION           │
        │       DATA RECEIVED?          │
        └──────────────────────────────┘
                           │ YES
                           ▼
        ┌──────────────────────────────┐  S205
        │   INPUT OPERATION DATA TO     │
        │ MACHINE LEARNING MODEL TO     │
        │     EXECUTE PREDICTION        │
        └──────────────────────────────┘
                           │
                           ▼
        ┌──────────────────────────────┐  S206
        │     ACQUIRE OUTPUT RESULT     │
        └──────────────────────────────┘
                           │
                           ▼
        ┌──────────────────────────────┐  S207
   NO ◄─┤      HAS OPERATION ENDED?     │
        └──────────────────────────────┘
                           │ YES
                           ▼
                    ┌─────────────┐
                    │     END     │
                    └─────────────┘
```

# FIG. 14

| | GAUSSIAN NOISE | SHOT NOISE | IMPULSE NOISE | DEFOCUS BLUR | GLASS BLUR |
|---|---|---|---|---|---|
| ORIGINAL MODEL | 72.33 | 65.71 | 72.92 | 46.94 | 54.32 |
| TTN METHOD | 28.08 | 26.12 | 36.27 | 12.82 | 35.28 |
| PL METHOD | 28.01 | 26.52 | 36.21 | 12.39 | 34.68 |
| ACCORDING TO FIRST EMBODIMENT (N -> FC) | 24.46 | 23.14 | 32.16 | 12.13 | 30.99 |
| ACCORDING TO FIRST EMBODIMENT (FC -> N) | 24.46 | 23.15 | 32.27 | 12.22 | 31.18 |

# FIG. 15

INFORMATION PROCESSING APPARATUS ⌇10

MEMORY ⌇10c

PROCESSOR ⌇10d

COMMUNICATION DEVICE ⌇10a

HDD ⌇10b

## INTERNATIONAL SEARCH REPORT

| International application No. |
| --- |
| **PCT/JP2021/039020** |

**A. CLASSIFICATION OF SUBJECT MATTER**

*G06N 20/00*(2019.01)i
FI: G06N20/00

According to International Patent Classification (IPC) or to both national classification and IPC

**B. FIELDS SEARCHED**

Minimum documentation searched (classification system followed by classification symbols)

G06N20/00

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | MAZANKIEWICZ, Alan et al. INCREMENTAL REAL-TIME PERSONALIZATION IN HUMAN ACTIVITY RECOGNITION USING DOMAIN ADAPTIVE BATCH NORMALIZATION. arXiv:2005.12178v2. Cornell University. 21 November 2020, [retrieval date 22 December 2021], Internet<URL:https://arxiv.org/pdf/2005.12178.pdf> <br> entire text, all drawings | 1-8 |
| A | IMBREA, Alexandru-Ionut. Automated Machine Learning Techniques for Data Streams. arXiv:2106.07317v1. Cornell University. 14 June 2021, [retrieval date 22 December 2021], Internet<URL:https://arxiv.org/pdf/2106.07317.pdf> <br> entire text, all drawings | 1-8 |

☐ Further documents are listed in the continuation of Box C.　　☐ See patent family annex.

| | |
| --- | --- |
| \* Special categories of cited documents: <br> "A" document defining the general state of the art which is not considered to be of particular relevance <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |
| Date of the actual completion of the international search <br><br> **22 December 2021** | Date of mailing of the international search report <br><br> **11 January 2022** |
| Name and mailing address of the ISA/JP <br><br> **Japan Patent Office (ISA/JP)** <br> **3-4-3 Kasumigaseki, Chiyoda-ku, Tokyo 100-8915** <br> **Japan** | Authorized officer <br><br><br><br> Telephone No. |

Form PCT/ISA/210 (second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **SERGEY IOFFE ; CHRISTIAN SZEGEDY.** Batch Normalization: Accelerating Deep Network Training by Reducing Internal Covariate Shift. *arXiv: 1502. 03167v3,* 02 March 2015